## Europäisches Patentamt

## European Patent Office

## Office européen des brevets

(19)

(11) Veröffentlichungsnummer: **0 050 214**
**A2**

(12) # EUROPÄISCHE PATENTANMELDUNG

(21) Anmeldenummer: **81107404.6**

(22) Anmeldetag: **18.09.81**

(51) Int. Cl.³: **G 09 B 7/06, A 63 F 9/18**

(30) Priorität: **18.10.80 DE 3039368**

(43) Veröffentlichungstag der Anmeldung: **28.04.82**
**Patentblatt 82/17**

(84) Benannte Vertragsstaaten: **AT BE CH DE FR GB IT LI LU NL**

(71) Anmelder: **Pelikan Aktiengesellschaft, Podbielskistrasse 141, D-3000 Hannover 1 (DE)**

(72) Erfinder: **Kupferschmidt, Wolfgang, Im Lönswinkel 18, D-3002 Wedemark 15 (DE)**
Erfinder: **Ulrich, Günter, Voltastrasse 4, D-3000 Hannover 1 (DE)**

(54) **Lernspielgerät und Fragekarte für ein Lernspielgerät.**

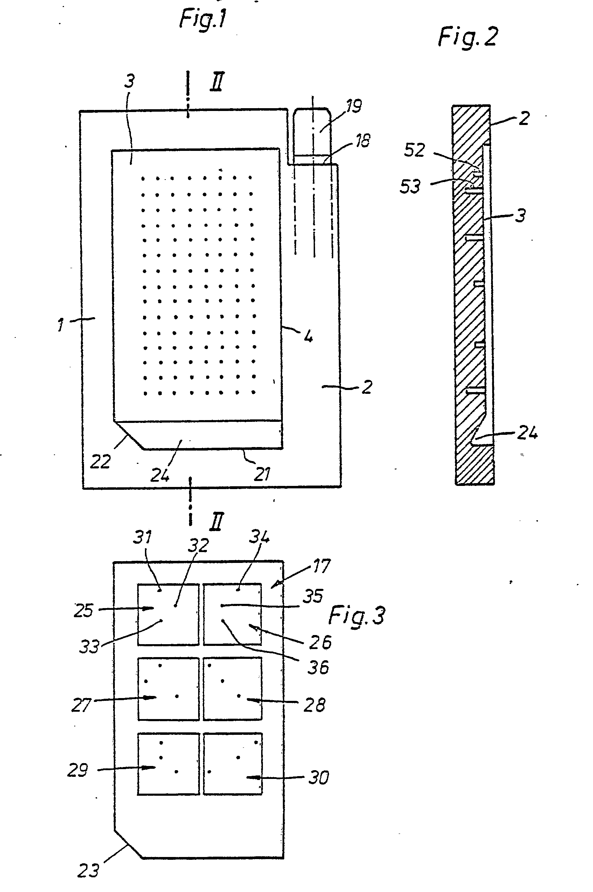

(57) Lernspielgerät mit einem in einer Platte angeordneten in Lochreihen und Lochspalten geordneten Lochmuster, in welchem Ansprechlöcher verteilt sind, und bei dem ein in einem Griffteil beweglicher Stift vorgesehen ist, der bei Eintritt in ein Ansprechloch mit einer Profilierung eines Ansprechloches im Lochmuster in Eingriff kommt und eine Signaleinrichtung bei einem solchen Eingriff im Griffteil auslöst, so daß die Platte als Auflagerfeld (3) für eine oben auswechselbar auflegbare Fragekarte (17) mit einzelnen dargestellten Fragen ausgeführt ist, daß Profilierungen (22) und (23) für die ausgerichtete Anordnung der Fragekarte (17) auf dem Auflagerfeld (3) vorgesehen sind und die auswechselbare Fragekarte (17) Fragefelder (25–30) mit wenigstens zwei Antwortlochungen (31–36), entsprechend dem Lochmuster in dem Auflagerfeld (3) aufweist, wobei ein Antwortloch jedes Fragefeldes zu einem Ansprechloch des Auflagerfeldes ausgerichtet ist (Fig. 1 + 3).

Pelikan Aktiengesellschaft                    15.9.1981
Hannover                                      80/14 EU


Lernspielgerät und Fragekarte
für ein Lernspielgerät.

Die Erfindung betrifft ein Lernspielgerät mit einem in einer
Platte angeordneten in Lochreihen und Lochspalten geordneten
Lochmuster, in welchem Ansprechlöcher verteilt sind, und bei
dem ein in einem Griffteil beweglicher Stift vorgesehen ist,
der bei Eintritt in ein Ansprechloch mit einer Profilierung
eines Ansprechloches im Lochmuster in Eingriff kommt und eine
Signaleinrichtung bei einem solchen Eingriff im Griffteil
auslöst.

Ein solches Lernspielgerät ist aus der US-PS 2889634 bekannt.
Dabei ist das Lochmuster in der Platte, die sich nur über
einen beschränkten Bereich der Tiefe des Lernspielgeräts
erstreckt, entweder von einer Schablone mit den Löchern hinterlegt, zwischen denen die geschlossene Schablone in bezug
zum Lochmuster der Platte Ansprechlöcher bestimmt, oder unterhalb der Platte ist eine Anordnung mit in ein Basislochmuster
einsteckbaren Stöpseln vorgesehen, wobei ebenfalls durch die
Anordnung der Stöpsel eine Lochbegrenzung der Löcher in der
Platte erfolgt, so daß dadurch Ansprechlöcher gebildet werden.

- 2 -

In der bekannten Ausführung sind Ansprechlöcher willkürlich
verteilt. Der Stift ragt bei dieser bekannten Ausführung aus
dem Griffteil heraus und wird dann, wenn er in ein Loch der
Platte gesteckt wird, das unterhalb dieser durch eines der
beschriebenen Mittel geschlossen ist, in den Griffteil bewegt,
so daß dann im Inneren des Griffteils ein Kontakt geschlossen
wird, der eine Signaleinrichtung, wie beispielsweise eine Lampe,
auslöst.

Bei diesem Lernspielgerät sind die Lochreihen und Lochspalten
des Lochmusters an den Rändern der Platte durch Buchstaben bzw.
Zahlen markiert, so daß eine Zahlen-Buchstabenkombination
jedem Loch zugeordnet ist und darüber hinaus durch bestimmte
Zahlen-Buchstabenkombinationen auch die Ansprechlöcher bestimmt
sind. Dadurch ist es möglich, Abfragespiele durchzuführen, bei
denen jedoch mit Abfrageschemen gearbeitet werden muß, um in
rein abstrakter Form die jeweiligen Ansprechlöcher zu kennzeichnen.

Der Griffteil hat eine Schulter als Führungsende für den Stift.
Diese Schulter hat größere Ausdehnung als die Löcher des Lochmusters in der Platte, so daß die Lage des Griffteils am Lochmuster immer begrenzt ist und der Stift in Abhängigkeit von der
gefundenen Lochtiefe in seiner herausragenden Stellung verbleibt oder zurückgeschoben wird, um dann die Signaleinrichtung
auszulösen.

Bei dieser bekannten Ausführung bildet z.B. die Schablone oder
die Anordnung der Stöpsel das Frageschema, wobei auf der Platte
lediglich ein Koordinatensystem angeordnet ist, das die einzelnen Lochspalten und Lochreihen jeweils bezeichnet. Bei diesem

- 3 -

Lernspielgerät sind Variationen dadurch möglich, daß entweder
die verdeckt angeordnete Schablone ausgewechselt wird oder die
Anordnung der Stöpsel geändert wird.

Ein solches Lernspiel liegt durch die Koordinatenaufteilung des
Lochmusters in abstrakter Form vor. Diese spricht insbesondere
Kinder kaum an und bildet somit nur einen geringen Spielanreiz.
Die Anwendung ist deshalb kompliziert, weil Anw-eisungen für
bestimmte Benutzungen neben dem Gerät bereitgehalten werden
müssen. Dabei ist vorbehalten, auf der Platte mit dem Lochmuster
grafische Darstellungen anzuordnen. Diese müßten aber, wenn sie
überhaupt funktionellen Einfluß haben sollen, immer geändert
werden, wenn der innere Abschluß für als Ansprechlöcher vorgesehene Löcher des Lochmusters geändert wird. Deshalb müßten dann
unter Einbeziehung eines Auseinanderbaues immer zwei verschiedene Teile ausgewechselt werden.

Weiterhin liegt ein Nachteil darin, daß bei der im wesentlichen
gleichmäßigen Verteilung der Ansprechlöcher keine die Benutzung
erleichternde Orientierung im Hinblick auf bestimmte Flächenabschnitte in der Platte vorliegt.

Der Erfindung liegt die Aufgabe zugrunde, ein Lernspielgerät der
oben angegebenen Art dadurch zu verbessern, daß einerseits der
Benutzungsreiz des Gerätes durch eine wechselnde sichtbare Ausstattung erhöht wird und andererseits dann auch zusätzlich in der
besonders bevorzugten Ausführungsform der Zweck des Lernspielgerätes dadurch verbessert erfüllt wird, daß ein Anreiz für die
vollständige Durchführung eines Spielvorganges gegeben wird.

Im Zusammenhang mit letzterem Gesichtspunkt wird bemerkt, daß
ein Kind schnell ermüdet, wenn es in geistiger Arbeit eine
Reihe von Fragen beantwortet.

Die Aufgabe wird dadurch gelöst, daß die Platte als Auflagerfeld
für eine oben auswechselbar auflegbare Fragekarte mit einzelnen
dargestellten Fragen ausgeführt ist, daß Profilierungen für die ausgerichtete Anordnung der Fragekarte auf dem Auflagerfeld
vorgesehen sind und die auswechselbare Fragekarte Fragefelder
mit wenigstens zwei Antwortlochungen entsprechend dem Lochmuster in dem Auflagerfeld aufweist, wobei ein Antwortloch
jedes Fragefeldes zu einem Ansprechloch des Auflagerfeldes ausgerichtet ist.

Hierdurch wird ein Lernspielgerät geschaffen, das aus einer
Kombination einem Auflagerfeld und zahlreichen verschieden ausgestalteten Fragekarten besteht, so daß dadurch verschiedene
Gedanken- oder Lernkomplexe darstellbar und sichtbar auf dem
Lernspielgerät anzuordnen sind. Hierbei ist es leicht möglich,
verschiedene Themen mit dem gleichen Gerät nur durch Auswechslung der Fragekarte zu behandeln.

Dabei ergibt sich jedoch gerade bei der Benutzung des Lernspielgeräts durch Kinder, daß diese bei Beantwortung von Fragen mit
geistiger Arbeit schnell ermüden. Wenn man also davon ausgeht,
daß erste Fragefelder einer Fragekarte, so wie sie im Gerät
dargeboten ist, noch mit Überlegung beantwortet werden, dann
besteht die Gefahr, daß ein restlicher Bereich einer Fragekarte
wegen auftretender Müdigkeit oder Unlust nicht mehr behandelt
wird. Ein Lehrprogramm würde dadurch unvollständig durchgeführt
und der Zweck nicht erreicht.

Insofern bezweckt die Erfindung auch im ersteren Bereich einer
Verarbeitung von Fragekarten, das noch entsprechend einem
Spieltrieb funktionierende Denkvermögen durch eine Vielzahl von
Möglichkeiten in der Anordnung von "Ja"-Antworten zu beanspruchen, während in anderen Bereichen aus der Merkfähigkeit die
Bearbeitung einer Fragekarte dadurch beschleunigt werden kann, daß dem Kind ungefähr die Lage für eine "Ja"-Antwort mehr oder
weniger bewußt ist. Dadurch wird wenigstens die Wahrnehmung
auch der im anderen Bereich angeordneten Frage und ihre Behandlung veranlaßt. Unter diesem Gesichtspunkt liegt eine bevorzugte Ausführung des erfindungsgemäßen Lernspiels darin, daß
eine Markierung für eine Ausrichtung "oben" und "unten" aufweist,
und daß die Ansprechlöcher über die Höhe unter den Löchern des
regelmäßigen Lochmusters derart verteilt sind, daß im oberen
Bereich mehr Ansprechlöcher als im unteren Bereich angeordnet
sind.

Oben bezeichnet dabei im vorliegenden Falle den einen und
unten den anderen Bereich. Durch Markierung des Auflagerfeldes
wird das Lernspielgerät zu dem das Gerät benutzenden Kindes
ausgerichtet. Diese Markierung kann darin bestehen, daß eine
Steckvorrichtung für den Griffteil mit Stift seitlich so vorgesehen ist, daß ein Signalkopf aus einer Ausnehmung, insbesondere
Eckenausnehmung, des Auflagerfeldes oben herausragt. Dies führt
zu einer unwillkürlichen Anordnung des Auflagerfeldes in bezug
zu dem das Gerät benutzenden Kindes, weil eine solche Anordnung
von Schreibblöcken mit einsteckbaren Schreibstiften geläufig
ist.

Durch die Verteilung der Ansprechlöcher von oben nach unten
mit abnehmender Häufigkeit wird dem Kind die Auswahl, die sich
aus der orientierten Anordnung der Fragekarte ergibt, im Bereich
der ersten Fragestellung erschwert, weil bei allen Fragekarten
eine größere Vielzahl der zugeordneten Lage von Ansprechlöchern
vorhanden ist. Im unteren Bereich wird die Vielzahl der Lage
der Ansprechlöcher in den einzelnen Fragefeldern herabgesetzt,
so daß dann schon das Gedächtnis des Kindes mitspielt, um die richtige Antwort schneller zu finden. Dadurch wird aber auch
sichergestellt, daß auch die letzten bzw. in der beschriebenen
räumlichen Anordnung unteren Fragefelder überhaupt wahrgenommen,
durchgesehen und behandelt werden, wobei sich auch aus dem Zusammenhang der Frage und richtigen Antwort, auch wenn sie erleichtert zu finden ist, die Einprägung der gestellten Frage im
Zusammenhang mit der richtigen Antwort ergibt. Mit besonderem
Vorteil sind im oberen Drittel des Auflagerfeldes etwa 48 %, im
mittleren Drittel etwa 31 % und im unteren Drittel etwa 21 %
der Ansprechlöcher angeordnet, wobei jeweils jede zeilenartige
Lochreihe belegt ist und eine willkürliche Verteilung von
Löchern über eine Lochreihe vorgesehen ist, sowie ferner in der
untersten Funktions-Lochreihe wenigstens zwei Ansprechlöcher und
nach oben hin wenigstens eine gleiche Anzahl von Ansprechlöchern
angeordnet sind. In diesem Zusammenhang wird bemerkt, daß der
Ausdruck Lochreihe bezüglich der "oben"- und "unten"-Anordnung
eine waagerechte Aufeinanderfolge von Löchern nach Art einer
Zeile beinhaltet.

Mit besonderem Vorteil ist die mengenmäßige Verteilung der
Ansprechlöcher nach dem Prinzip einer Gauß'schen Kurve in den
einzelnen horizontal liegenden Lochreihen angeordnet. Die
Gauß'sche Kurve stellt eine besonders vorteilhafte Lösung dar,
weil sie nicht nur zu einer psychologisch sinnvollen Verteilung,
sondern auch zu einer verhältnismäßig leichten Herstellbarkeit
führt.

Zweckmäßig entspricht in der Gauß'schen Kurve der Parameter A
der Anzahl der horizontalen Lochreihen. Dabei wird vorausgesetzt, daß in einem Koordinatensystem mit der Ordinate Y und
der Abszisse X die Gauß'sche Formel lautet

$$Y = -Ae^{-BX^2}$$

Dabei ergibt das Vorzeichen, daß die Kurve unter der Abszisse X
nach unten gerichtet ist, was der Zuordnung zu der entsprechenden Ausrichtung des Geräts zur spielenden Person entspricht.

Besonders bevorzugt wird dabei, daß in der Gauß'schen Kurve der Parameter B zwischen den Grenzwerten 1030 und 1090 liegt, vorzugsweise bei 1050 gewählt ist. Der Parameter 1050 stellt eine besonders bevorzugte Ausführungsform dar, weil hierdurch unter obigen Gesichtspunkten eine Lochverteilung erreicht wird, die dem psychologischen Aufnahmevermögen eines Kindes besonders nahe kommt. Hierin liegt eine Regel für eine spezielle Anordnung, die aus einer Mehrzahl von Möglichkeiten ausgewählt ist.

Unter obigen Gesichtspunkten erfolgt eine Verteilung der Ansprechlöcher innerhalb von Lochreihen mit einer Lochzahl nach der Methode, daß zu einer Startzahl A kleiner als 1 $\pi$ addiert und diese Summe in die fünfte Potenz gesetzt wird, davon der Nachkommaanteil = C mit 100 multipliziert und von diesem Produkt der Anteil D vor dem Komma unter der Voraussetzung verwendet wird, daß D größer als Null und kleiner als die maximale Anzahl von Löchern je Lochreihe ist, um die Nummer des in der Lochreihe zu belegenden Anspruchloches festzulegen, während bei D außerhalb der Grenzen eine neue Zahl unter Verwendung der Zahl C als Startzahl der Berechnung zugrundegelegt ist.

Wenn auch bereits oben dargelegt ist, daß Profilierungen für die ausgerichtete Anordnung der Fragekarte auf dem Auflagerfeld vorgesehen sind, so liegt darin eine vorteilhafte Ausführung, daß das Auflagerfeld mit Randmarkierungen zur ausgerichteten Anordnung einer Fragekarte versehen ist und daß in den Randprofilierungen und im Rand einer Fragekarte sich ergänzende unregelmäßige Profilierungen angeordnet sind. Hierbei wird einbezogen, daß das Auflagerfeld neben dem Bereich des Lochmusters eine Vertiefung zur Einbringung der Fragekarte aufweist. Dadurch wird automatisch die Fragekarte gegen Verschiebung gesichert, auch wenn der Griffteil mit Stift zunächst ungenau aufgebracht wird.

Zweckmäßig sind die unregelmäßigen Profilierungen als abgeschrägte Ecke eines Randes eines vertieften Auflagerfeldes
ausgeführt.

Gemäß einer weiteren vorteilhaften Ausgestaltung ist am Begrenzungsrand eines versenkten Auflagerfeldes mit vor- und/oder
zurückspringenden Profilierungen in der Ebene versehen und entsprechende Profilierungen sind am Rand der Fragekarte angeordnet. Dadurch ist es leicht möglich, für ein Grundgerät des Lernspielgerätes zahlreiche Sätze von Fragekarten bereitzuhalten,
die immer in definierter Weise angeordnet werden und unter Ausnutzung der Verteilung von Ansprechlöchern eine vielfältige
Basis für ein abwechslungsreiches Spiel bieten.

Einbezogen wird dabei auch, daß dem Lochmuster außerhalb seiner
Begrenzungen Vertiefungen asymmetrisch in dem Auflagerfeld zugeordnet sind und in entsprechender Anordnung Vorsprünge an der
Unterseite der Fragekarte angeordnet sind. Solche Vorsprünge
können noppenförmig oder leistenartig ausgebildet sein.

Ferner wird gerade im Zusammenhang mit den vor- und zurückspringenden Profilierungen in der Ebene des Lochmusters des
Auflagerfeldes einbezogen, daß im oberen Teil definiert in
Eingriff kommende vor- oder zurückspringende Profilierungen
wechselseitig angeordnet sind, während im unteren Teil in der
Richtung von oben nach unten eines der Profilierungsteile mit
Spiel zum anderen Profilierungsteil ausgeführt ist, damit im
beschränkten Maße Wärmeausdehnungen aufgenommen werden können.
Das Spiel richtet sich nach den verwendeten Materialien.

- 9 -

Gemäß einer weiteren zweckmäßigen Ausgestaltung hat das Auflagerfeld, und zwar insbesondere das Auflagerfeld am unteren
Rand eine quer durchgehende Vertiefung. Das hat den Zweck, durch
Druck auf eine Fragekarte in diesem Bereich den oberen Rand
hochzuklappen, so daß eine Entnahme leicht möglich ist. In
diesem Zusammenhang sind die ortsbestimmenden Ausdrücke unten
und oben auswechselbar.

Die Erfindung bezieht sich zugleich auf eine Fragekarte für ein
Lernspielgerät der oben angegebenen Art. Diese Fragekarte ist
dadurch gekennzeichnet, daß für jede auf der einzelnen Fragekarte verzeichnete Frage in einem zugeordneten Fragefeld
mindestens zwei Antwortlochungen vorgesehen sind, wobei jeweils
nur so viele Ansprechlöcher auswählbar sind, als richtige
Antworten möglich sind.

Insbesondere ist die Fragekarte durch Randprofilierungen und/oder
Vorsprünge gekennzeichnet, wie sie oben angegeben sind. Die
Erfindung wird im folgenden anhand von Ausführungsbeispielen
erläutert, die in der Zeichnung dargestellt sind.
In der Zeichnung zeigen:

Fig. 1      eine Draufsicht auf ein Lernspielgerät;

Fig. 2      einen Schnitt längs der Linie II-II durch Fig. 1;

Fig. 3      eine Draufsicht auf eine Fragekarte für ein Lernspielgerät nach Fig. 1;

Fig. 4      eine Draufsicht mit Darstellung des Randes eines
            Auflagerfeldes mit einer eingefügten Fragekarte zur
            Erläuterung verschiedener Profilierungsmöglichkeiten;

Fig. 5      eine Draufsicht auf eine Fragekart mit einer
            weiteren Profilierungsmöglichkeit;

Fig. 6    eine Seitenansicht von Fig. 5;

Fig. 7    einen Griffteil mit einem Stift zur Verwendung
in dem Lernspielgerät;

Fig. 8    ein beispielsweises Lochmuster im Auflagerfeld
nach der Verteilung einer bevorzugten Gauß'schen
Kurve.

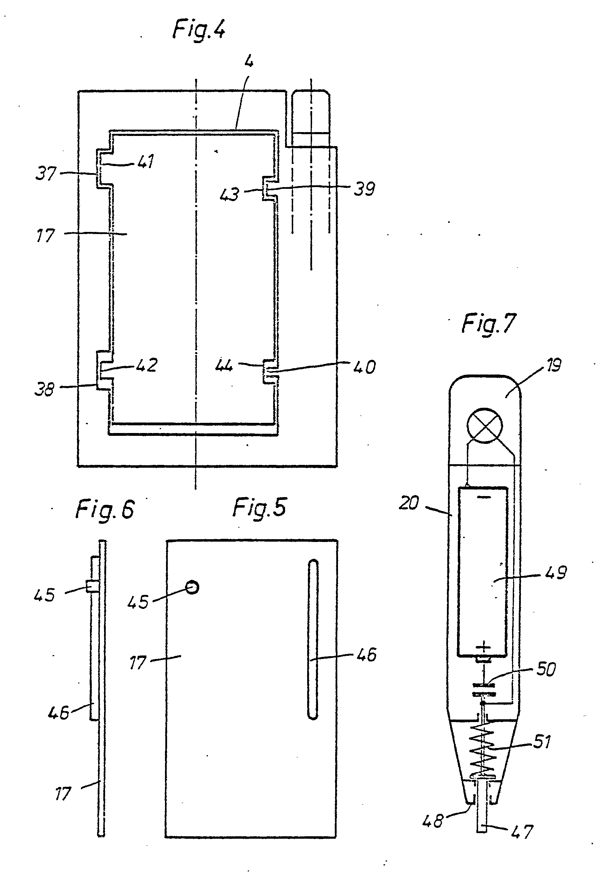

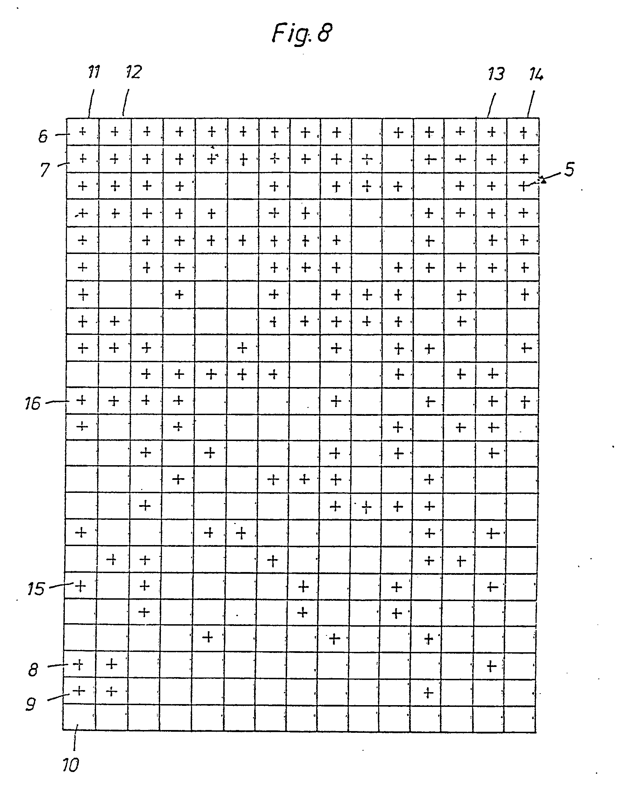

Das Lernspielgerät besitzt ein in Fig. 1 von oben gezeichnetes
kastenartiges Gehäuse 1. In der Oberseite 2 dieses kastenartigen
Gehäuses ist ein Auflagerfeld 3 versenkt innerhalb von einer
Randlinie 4 angeordnet. In diesem Auflagerfeld, das im wesentlichen auch herausgelöst in Fig. 8 gezeigt ist, ist ein Lochmuster 5 angeordnet. Dieses besteht im Ausführungsbeispiel aus
22 Funktionszeilen 6, 7 von oben bis 8, 9 am unteren Rand.
Diese Funktionszeilen werden auch als Lochreihen bezeichnet.
Am sogenannten unteren Rand unter der Funktionsreihe 9 ist
beispielsweise eine Leerlochreihe 10 angeordnet. Dieses hängt
in erster Linie mit einer besonderen Ausgestaltung des Auflagerfeldes 3 zusammen, was noch beschrieben wird. In diesem
Lochmuster 5 sind außer den Lochmustern 6, 7 .. 8, 9 .. auch
15 Lochspalten 11, 12 ... 13, 14 .. angeordnet. Das Muster
zeigt in den rechteckigen Feldern Stellen, in denen jeweils
ein Loch angeordnet ist. Die mit einem Kreuz versehenen Felder
sind als Ansprechlöcher ausgeführt. Solche Ansprechlöcher sind
in der einfachen Ausführungsform Löcher mit geringerer Tiefe,
wie noch anhand der Fig. 7 erläutert werden wird. Es ist erkennbar, daß in einer Verteilung bei Fig. 8 von oben nach unten die
Anzahl der Ansprechlöcher stark abnimmt. In den beiden oberen
Lochreihen 6, 7 sind jeweils 14 Ansprechlöcher und in den beiden
unteren Reihen 8, 9 jeweils drei Ansprechlöcher angeordnet,
wobei von oben nach unten erkennbar ist, daß bei sich ändernder
Verteilung über die Lochreihen zunächst die Anzahl der Ansprechlöcher gleich bleibt und dann zunimmt, wobei beispielsweise in einer Lochreihe 15 fünf Ansprechlöcher und in einer um sieben Reihen entfernten Lochreihe 16 acht Ansprechlöcher angeordnet sind. Die Häufigkeit und Verteilung richtet sich nach den oben angegebenen Regeln. Das Lochmuster 5 ist im Auflagerfeld 3 angeordnet, wobei es von der Randlinie 4 des Auflagerfeldes nach innen versetzt ist, so daß eine eingebrachte Fragekarte 17 (Fig. 3) mit ihren Rändern innerhalb der Rand-vertiefung an der Randlinie 4 anliegt.

Dabei ist erkennbar, daß das Gehäuse 1 oben rechts eine Profilierungsausnehmung 18 aufweist, in welcher der Kopf 19 für einen Griffteil 20 (Fig. 7) liegt. Hierdurch ist das Gehäuse mit einer Markierung versehen, die eine Ausrichtung zum Benutzer des Lernspielgerätes ermöglicht, wobei durchaus vorbehalten bleibt, am oberen oder unteren Rand einen Markierungspfeil oder eine andere Markierung anzubringen. Die Profilierungsausnehmung 18 ist im übrigen nicht nur ersichtlich, sondern auch zu erfühlen.

Das Auflagerfeld 4 hat im Bereich seines unteren Randes 21 eine abgeschrägte Randecke 22, der eine abgeschrägte Ecke 23 der Fragekarte entspricht. Daher ist es nur möglich, die Fragekarte 17 in der zutreffenden Ausrichtung einzubringen.

Am unteren Rand des Auflagerfeldes hat dieses eine quer verlaufende Vertiefung 24, die unterhalb des Bereiches des Lochmusters angeordnet ist und infolgedessen auch bezüglich der Fragekarte 17 unterhalb des Bereiches der auf ihr angeordneten Fragefelder 25 - 30. Dadurch ist es möglich, durch Tippen auf den unteren Rand der Fragekarte 17 diese aus dem Auflagerfeld 3 oben herauszunehmen, so daß eine Auswechslung leicht möglich ist.

- 12 -

In den einzelnen Fragefeldern sind Probleme angesprochen und dann, wie beispielsweise für die Fragefelder 25, 26 dargestellt, drei Antwortlochungen 31-33 bzw. 34-36 angeordnet.

Wie in Fig. 8 anhand der Verteilung der Ansprechlöcher durch Kreuze dargestellt erkennbar ist, ergibt sich regelmäßig für die oberen Fragefelder 25, 26 eine Mehrzahl von Möglichkeiten richtiger Antwortlochungen. Für die mittleren und insbesondere unteren Fragefelder 29, 30 ist die Antwortmöglichkeit für die die richtige Beantwortung ausdrückende Antwortlochung weitaus begrenzter. Dadurch ergeben sich die oben geschilderten Vorteile.

In Fig. 4 ist der Rand 4 eines Auflagerfeldes 3 mit einer eingebrachten Fragekarte gezeigt. Dabei ist erkennbar, daß der Rand 4 in der Ebene des Auflagerfeldes bzw. der Fragekarte 17 zurückspringende 37, 38 oder vorspringende Profilierungen 39,40 haben kann, denen korrespondierende Vorsprünge 41, 42 bzw. zurückspringende Profilierungen 43, 44 der Fragekarte 17 zugeordnet sind. Während "oben" angeordnete Profilierungen 37, 39, 41, 43 im wesentlichen passend ausgeführt sind, können zwischen den unteren in Eingriff stehenden Profilierungen 38, 40 bzw. 42, 44 ein Spiel insbesondere in der Wirkungslinie von unten nach oben vorgesehen sein, um Wärmeausdehnungen zu berücksichtigen.

Die Mittellinie in Fig. 4 zeigt, daß jeweils entsprechende Profilierungen an der einen Seite und auch an der anderen Seite auftreten können, wobei bezüglich verschiedener Seiten auch eine Versetzung von oben nach unten erfolgt. Es genügen auch einseitig angeordnete Profilierungen. Fig. 4 stellt eine Zusammenfassung mehrerer Möglichkeiten dar.

Nach den Fig. 5 und 6 hat eine Fragekarte nach unten in das
Auflagerfeld vorspringende Profilierungen, für welche dann im
Auflagerfeld entsprechende Gegenprofilierungen ausgebildet
sind. Beispielsweise sind eine noppenartig vorspringende
Profilierung 45 an einer Seite der Unterseite der Fragekarte 17
und eine längs eines Randes verlaufende leistenförmige Profilierung ebenfalls an der Unterseite einer Fragekarte 17
erkennbar.

Der Griffteil 20 mit dem unten herausragenden Stift 47, neben
dessen Austrittsöffnung eine Stufe 48 mit größerem Querschnitt
als ein Antwortloch angeordnet ist, hat oben beispielsweise
einen Kopf 19 für eine optische Signaleinrichtung. Im Inneren
hat der Griffteil eine Batterie 49, an die die optische Signaleinrichtung 19 über einen Schalter 50 einschaltbar ist, der
durch Eindrücken des Stiftes 47 gegen die Wirkung einer
Feder 51 geschlossen werden kann, wenn der Stift 47 in ein
Ansprechloch eindringt.

In Fig. 2 ist beispielsweise zur Erläuterung ein Ansprechloch 52
geringerer Tiefe neben einem Loch 53 gezeigt, das so tief ist,
daß der Stift 47 nicht bewegt wird, wenn die Schulter 48 auf
den Rand einer Antwortlochung einer Fragekarte trifft.

In Fig. 2 sind die Löcher 53 und Ansprechlöcher 52 nur rein
schematisch dargestellt. Es versteht sich, daß in einer Reihe
der Löcher von oben nach unten Löcher 53 in gleichmäßiger
Verteilung nach der Matrix angeordnet sind und Ansprechlöcher
52 nach der besonderen Regel verteilt vorgesehen sind.

Pelikan Aktiengesellschaft                    15.9.1981
Hannover                                       80/14 EU

Patentansprüche

1. Lernspielgerät mit einem in einer Platte angeordneten in
   Lochreihen und Lochspalten geordneten Lochmuster, in welchem Ansprechlöcher verteilt sind, und bei dem ein in
   einem Griffteil beweglicher Stift vorgesehen ist, der bei
   Eintritt in ein Ansprechloch mit einer Profilierung eines
   Ansprechloches im Lochmuster in Eingriff kommt und eine
   Signaleinrichtung bei einem solchen Eingriff im Griffteil
   auslöst, dadurch gekennzeichnet, daß die Platte als Auflagerfeld (3) für eine oben auswechselbar auflegbare Fragekarte (17) mit einzelnen dargestellten Fragen ausgeführt
   ist, daß Profilierungen (22, 23, 37-46) für die ausgerichtete Anordnung der Fragekarte (17) auf dem Auflagerfeld(3)
   vorgesehen sind und die auswechselbare Fragekarte (17)
   Fragefelder (25-30) mit wenigstens zwei Antwortlochungen
   (31-36) entsprechend dem Lochmuster (5) in dem Auflagerfeld (3) aufweist, wobei ein Antwortloch jedes Fragefeldes
   zu einem Ansprechloch des Auflagerfeldes ausgerichtet ist.

2. Lernspielgerät nach Anspruch 1, dadurch gekennzeichnet, daß
   das Auflagerfeld (3) eine Markierung (18) für eine Ausrichtung "oben" und "unten" aufweist, und daß die Ansprechlöcher über die Höhe unter den Löchern des regelmäßigen
   Lochmusters (5) derart verteilt sind, daß im oberen Bereich

- 2 -

mehr Ansprechlöcher als im unteren Bereich angeordnet
sind.

3. Lernspielgerät nach Anspruch 2, dadurch gekennzeichnet,
   daß im oberen Drittel des Auflagerfeldes (3) etwa 48 %, im
   mittleren Drittel etwa 31 % und im unteren Drittel etwa
   21 % der Ansprechlöcher angeordnet sind, wobei jeweils
   jede zeilenartige Lochreihe (6-9) belegt ist und eine willkürliche Verteilung von Löchern über eine Lochreihe vorgesehen ist, sowie ferner in der untersten Funktions-Lochreihe (9) wenigstens zwei Ansprechlöcher und nach oben hin
   wenigstens eine gleiche Anzahl von Ansprechlöchern angeordnet sind.

4. Lernspielgerät nach den Ansprüchen 2 und 3, dadurch gekennzeichnet, daß die mengenmäßige Verteilung der Ansprechlöcher nach dem Prinzip einer Gauß'schen Kurve in den
   einzelnen horizontal liegenden Lochreihen (6-9) angeordnet
   ist.

5. Lernspielgerät nach Anspruch 4, dadurch gekennzeichnet, daß
   in der Gauß'schen Kurve der Parameter A der Anzahl der
   horizontalen Lochreihen entspricht.

6. Lernspielgerät nach Anspruch 4, dadurch gekennzeichnet,
   daß in der Gauß'schen Kurve der Parameter B zwischen den
   Grenzwerten 1030 und 109o liegt, vorzugsweise bei 1050
   gewählt ist.

7. Lernspielgerät nach einem der Ansprüche 1 - 5, dadurch
   gekennzeichnet, daß eine Verteilung der Ansprechlöcher
   innerhalb von Lochreihen mit einer Lochzahl Z nach der Methode erfolgt, daß/einer Startzahl A kleiner als 1
$\pi$ addiert und diese Summe in die fünfte Potenz gesetzt
wird, davon der Nachkommaanteil = C mit 100 multipliziert
und von diesem Produkt der Anteil D vor dem Komma unter
der Voraussetzung verwendet wird, daß D größer als Null
und kleiner als die maximale Anzahl von Löchern je Lochreihe ist, um die Nummer des in der Lochreihe zu belegenden
Anspruchsloches festzulegen, während bei D außerhalb der
Grenzen eine neue Zahl unter Verwendung der Zahl C als
Startzahl der Berechnung zugrunde gelegt ist.

8. Lernspielgerät nach einem der Ansprüche 1 - 7, dadurch
gekennzeichnet, daß das Auflagerfeld mit Randmarkierungen
(22, 23; 37-46) zur ausgerichteten Anordnung einer Fragekarte (17) versehen ist und daß in den Randprofilierungen
und im Rand einer Fragekarte (17) sich ergänzende unregelmäßige Profilierungen angeordnet sind.

9. Lernspielgerät nach Anspruch 8, dadurch gekennzeichnet,
daß die unregelmäßigen Profilierungen als abgeschrägte
Ecke (22, 23) eines Randes(4) eines vertieften Auflagerfeldes (3) ausgeführt sind.

10. Lernspielgerät nach Anspruch 8, dadurch gekennzeichnet,
daß am Begrenzungsrand (4) eines versenkten Auflagerfeldes
(3) mit vor- und/oder zurückspringenden Profilierungen (22,
37, 38, 39, 40) in der Ebene versehen ist und daß entsprechende Profilierungen (23, 41, 42, 43, 44) am Rand der
Fragekarte (17) angeordnet sind.

11. Lernspielgerät nach einem der Ansprüche 1 und 8 - 10,
dadurch gekennzeichnet, daß dem Lochmuster (5) außerhalb
seiner Begrenzungen Vertiefungen asymmetrisch in dem Auflagerfeld (3) zugeordnet sind und in entsprechender Anordnung Vorsprünge (45, 46) an der Unterseite der Fragekarte
(17) angeordnet sind.

12. Lernspielgerät nach einem der Ansprüche 8 - 11, dadurch
gekennzeichnet, daß ineinandergreifenden Profilierungen (37,
39, 41, 43) im oberen oder unteren Bereich der Fragekarte(17)
mit Spiel in Richtung oben nach unten ineinandergreifende
Profilierungen (38, 40, 42, 44) im anderen Bereich zugeordnet sind.

13. Lernspielgerät nach einem der Ansprüche 1 - 8, dadurch
gekennzeichnet, daß das Auflagerfeld (3) neben dem Bereich
des Lochmusters (5) eine Vertiefung (24) aufweist.

14. Fragekarte für ein Lernspielgerät nach Anspruch 1, dadurch
gekennzeichnet, daß für jede auf der einzelnen Fragekarte (17) verzeichnete Frage in einem zugeordneten Fragefeld (25 - 30) mindestens zwei Antwortlochungen (31 - 36)
vorgesehen sind, wobei jeweils nur so viele Ansprechlöcher
auswählbar sind, als richtige Antworten möglich sind.

15. Fragekarte nach Anspruch 14, gekennzeichnet durch eine
Randprofilierung oder Vorsprünge nach einem der Ansprüche
8 - 12.

1/3

0050214

Fig.1

Fig.2

Fig.3

0050214

## Fig.4

37 — 41

43 — 39

17

38 — 42 44 — 40

## Fig.6

45 —

46 —

17 —

## Fig.5

45

17

46

## Fig.7

19

20

49

50

51

48

47

Fig. 8